# EUROPEAN PATENT APPLICATION

(11) **EP 4 458 774 A1**
(43) Date of publication of application: **06.11.2024**
(21) Application number: 22908858.8
(22) Date of filing: 28.03.2022
(51) Int. Cl.: C01G 53/00, H01M 4/36, H01M 4/505, H01M 4/525

(54) **TERNARY POSITIVE ELECTRODE MATERIAL PRECURSOR AND PREPARATION METHOD THEREFOR, POSITIVE ELECTRODE MATERIAL, POSITIVE ELECTRODE SLURRY, LITHIUM ION BATTERY, POSITIVE ELECTRODE, AND ELECTRIC DEVICE**

(30) Priority: 28.12.2021 CN 202111623510
(71) Applicant: CNGR Advanced Material Co., Ltd., Tongren, Guizhou 554300 (CN)
(72) Inventor: YIN, Shuo, Changsha, Hunan 410000 (CN); WANG, Le, Tongren, Guizhou 554300 (CN); ZHANG, Yuying, Tongren, Guizhou 554300 (CN); JI, Fangli, Tongren, Guizhou 554300 (CN); LI, Kui, Tongren, Guizhou 554300 (CN); WANG, Yiqiao, Tongren, Guizhou 554300 (CN); SHA, Jin, Tongren, Guizhou 554300 (CN)
(74) Representative: Locas, Davide
(86) International application number: PCT/CN2022/083481
(87) International publication number: WO 2023/123713

(57) **Abstract**

The present disclosure provides a ternary positive electrode material precursor and a preparation method thereof, a positive electrode material, a positive electrode slurry, a lithium-ion battery and a positive electrode thereof as well as an electric-involved equipment. The ternary positive electrode material precursor comprises a core layer, an intermediate layer, and a shell layer, wherein the porosities of the core layer, the intermediate layer, and the shell layer increase sequentially. The preparation method: mixing raw materials including a nickel source, a cobalt source, a manganese source, a precipitating agent, and a complexing agent; and performing a reaction of solution coprecipitation method. The positive electrode material is made of raw materials comprising the ternary positive electrode material precursor. The positive electrode slurry is made of raw materials comprising the positive electrode material. The lithium-ion battery positive electrode is made of raw materials comprising the lithium-ion battery positive electrode slurry. The lithium-ion battery is made of raw materials comprising the lithium-ion battery positive electrode. The electric-involved equipment comprises the lithium-ion battery. As for the ternary positive electrode material precursor and the positive electrode material provided in the present disclosure, through a special distribution of pores, the structure of the material can be stabilized, the crack formation is avoided, the phase transition during the cycle process is inhibited, the service life is prolonged, and the cycle performance and the rate performance of the material are improved.

## Description

### Cross-Reference to Related Applications

The present disclosure claims the priority to Chinese patent application filed with the China National Intellectual Property Administration on December 28, 2021 with the filing No. 202111623510.0, and entitled "Ternary Positive Electrode Material Precursor and Preparation Method Thereof, Positive Electrode Material, Positive Electrode Slurry, Lithium-ion Battery and Positive Electrode Thereof as well as Electric-involved Equipment", all the contents of which is incorporated herein by reference.

### Technical Field

The present disclosure relates to the field of lithium-ion batteries, and particularly to a ternary positive electrode material precursor and a preparation method thereof, a positive electrode material, a positive electrode slurry, a lithium-ion battery and a positive electrode thereof as well as an electric-involved equipment.

### Background Art

Lithium-ion batteries represent a new generation of high-energy renewable green energy resource. It has the characteristics of high working voltage, high energy density, good safety performance, long cycle life, low self-discharge rate and no memory effect etc., and has been widely used in various electric vehicles and large-scale energy storage fields. In recent years, with the rapid development of electric vehicles, requirements for energy density of lithium batteries become higher and higher; and in order to improve the battery life of electric vehicles, it is extremely urgent to develop power batteries with high energy density.

Excellent performance of lithium-ion batteries in cycle stability, capacity, and voltage etc., mainly depends on the preparation of positive electrode materials, but conventional positive electrode materials have low capacity, which restrains the improvement of the overall capacity of lithium-ion batteries. Therefore, it is a focal and difficult issue in the current research on lithium-ion batteries to develop a positive electrode material having high capacity, excellent rate performance, stable cycle performance, and good safety.

Among numerous positive electrode materials for lithium-ion batteries, compared with conventional positive electrode materials, layered ternary positive electrode materials have clear advantages in terms of higher capacity, better cycle performance, low costs and the like; however, the structure of these materials is unstable during the charging and discharging processes, and is prone to transform to the spinel phase and the rock salt phase, resulting in excessively fast capacity attenuation during the cyclic process; and its thermal stability and safety performance are relatively poor. These shortcomings restrain the extensive application of layered ternary materials to a certain extent.

### Summary

An object of the present disclosure is to provide a ternary positive electrode material precursor and a preparation method thereof, a positive electrode material, a positive electrode slurry, a lithium-ion battery and a positive electrode thereof as well as an electric-involved equipment, so as to solve the above problems.

In order to achieve the above object, following technical solution is employed in the present disclosure.

A ternary positive electrode material precursor, comprising a core layer, an intermediate layer, and a shell layer, wherein the intermediate layer covers the core layer, the shell layer covers the intermediate layer, and the porosities of the core layer, the intermediate layer, and the shell layer increase sequentially.

Preferably, the porosity of the core layer ranges from 5.4% to 17.1%, the porosity of the intermediate layer ranges from 7.8% to 19.2%, and the porosity of the shell layer ranges from 9% to 20.1 %.

Preferably, the porosity of the core layer ranges from 7.03% to 12.74%, the porosity of the intermediate layer ranges from 8.7% to 13.6%, and the porosity of the shell layer ranges from 14.8% to 16.3%.

Preferably, the radius of the core layer accounts for 25%-30% of the overall radius, the thickness of the intermediate layer accounts for 50%-58.8% of the overall radius, and the thickness of the shell layer accounts for 11.2%-25% of the overall radius.

Preferably, the D50 of the ternary positive electrode material precursor ranges from 7 to 15 µm, and (D90-D10)/D50 = 0.6-0.8.

Preferably, the half-peak width of (001) crystal facet of the ternary positive electrode material precursor ranges from 0.4 to 0.88°, and the half-peak width of (101) crystal facet ranges from 0.25 to 0.61°.

Preferably, the FWHM (Full width at half maximum) (1001-1101)/1101 ratio range of the ternary positive electrode material precursor is 0.1-0.9.

Preferably, the BET/TD ratio of the ternary positive electrode material precursor ranges from 3.90 to 6.66.

Preferably, the ternary positive electrode material precursor has a chemical general formula of NiₓCo_{y}Mn_{z}Me_{(1-x-y-z)}(OH)₂, where 0.6 ≤ x ≤ 1, 0 < y ≤ 1, 0 < z ≤ 1, and x+y+z ≤ 1; and Me represents a doped element, and the doped element includes one or more of Al, Ti, V, W, Zr, Mg, Ce, Nb, and La.

Preferably, the content of the doped element in mass percent ranges from 0.01% to 10%.

The present disclosure further provides a preparation method for a ternary positive electrode material precursor, comprising:
mixing raw materials including a nickel source, a cobalt source, a manganese source, a precipitating agent, and a complexing agent; and obtaining the ternary positive electrode material precursor through a reaction of solution coprecipitation method.

Preferably, the nickel source includes nickel sulfate, the cobalt source includes cobalt sulfate, the manganese source includes manganese sulfate, the precipitating agent includes one or more of sodium hydroxide, sodium carbonate, and sodium bicarbonate, and the complexing agent includes one or more of aqueous ammonia, sodium citrate, EDTA, and oxalic acid.

Preferably, the nickel source, the cobalt source, and the manganese source are pre-mixed to obtain a ternary metal salt solution for use.

Preferably, the concentration of the ternary metal salt solution ranges from 100 g/L to 130 g/L.

Preferably, the mixing comprises:
firstly mixing water, the precipitating agent, and the complexing agent to obtain a reaction base solution, then introducing the ternary metal salt solution, the complexing agent, and the precipitating agent into the reaction base solution.

Preferably, the pH of the substrate liquid is 11-12.

Preferably, a protective gas is introduced into the reaction system.

Preferably, during the reaction process, the pH of the system is 10-12, and the range of nickel content in the supernatant is controlled at 0-500 ppm.

Preferably, during the reaction process, the pH of the system gradually decreases from 11.9 to a range of 10.8-10.3.

Preferably, the reaction temperature ranges from 40°C to 70°C.

Preferably, the stirring speed of the reaction ranges from 100 r/min to 600 r/min.

Preferably, the raw materials further comprise a doped element solution.

Preferably, the doped element in the doped element solution includes one or more of Al, Ti, V, W, Zr, Mg, Ce, Nb, and La.

Preferably, the doped element is W, and the doped element solution contains sodium tungstate and sodium citrate.

Preferably, the mass ratio of sodium tungstate to sodium citrate is 1-3:1.

Preferably, the preparation method for a ternary positive electrode material precursor further comprises postprocessing, which comprises alkali wash, water wash, and drying.

Preferably, the volume ratio between alkali wash and water wash is as follows: V_{water wash}:V_{alkali wash} = (2-8):1, and the temperatures for alkali wash and water wash are each independently 30-70°C.

Preferably, the drying temperature ranges from 100°C to 180°C, and the moisture content is less than or equal to 0.4%.

The present disclosure further provides a positive electrode material, comprising an inner core, an intermediate region, and an outer shell, wherein the intermediate region covers the inner core, the outer shell covers the intermediate region, and the porosities of the inner core, the intermediate region, and the outer shell increase sequentially.

The present disclosure further provides a positive electrode slurry, of which raw materials comprise the positive electrode material as described above.

The present disclosure further provides a lithium-ion battery positive electrode, of which raw materials comprise the lithium-ion battery positive electrode slurry as described above.

The present disclosure further provides a lithium-ion battery, of which raw materials comprise the lithium-ion battery positive electrode as described above.

The present disclosure further provides an electric-involved equipment, comprising the lithium-ion battery as described above.

In comparison with the prior art, the present disclosure comprise following beneficial effects.

The ternary positive electrode material precursor provided in the present disclosure has a special pore distribution, in which the porosities from the core layer to the intermediate layer, and then to the shell layer increase sequentially, wherein the structure of the ternary material can be stabilized, the material crack formation can be effectively avoided, and the phase transition during the cycle process is inhibited, so as to prolong the service life of the material, while the cycle performance, the rate performance, and the energy density of the material can be improved.

The preparation method for a ternary positive electrode material precursor provided in the present disclosure is simple in process, demands low costs, and can realize large-scale industrial production.

The positive electrode material, the positive electrode slurry, the lithium-ion battery positive electrode, and the lithium-ion battery provided in the present disclosure are highly stabilized, and have good safety and excellent electrical performance.

The lithium-ion battery provided in the present disclosure is widely applied.

### Brief Description of Drawings

In order to more clearly illustrate the technical solutions of the embodiments of the present disclosure, the drawings required to be used in the embodiments will be simply presented below; and it shall be understood that the following drawings merely show certain embodiments of the present disclosure, and thus should not be deemed as limiting the scope of the present disclosure.
Fig. 1 is a schematic diagram of the model of an obtained ternary positive electrode material precursor;
Fig. 2 is an SEM (scanning electron microscope) image of a ternary positive electrode material precursor obtained in Example 1;
Fig. 3 is an SEM image of a profile of the ternary positive electrode material precursor obtained in Example 1;
Fig. 4 is an XRD spectrum of the ternary positive electrode material precursor obtained in Example 1;
Fig. 5 is a differential distribution curve of mesoporous pore size of the ternary positive electrode material precursor obtained in Example 1;
Fig. 6 is an SEM image of a ternary positive electrode material precursor obtained in Example 2;
Fig. 7 is an XRD spectrum of the ternary positive electrode material precursor obtained in Example 2;
Fig. 8 is an SEM image of a ternary positive electrode material precursor obtained in Example 3;
Fig. 9 is an XRD spectrum of the ternary positive electrode material precursor obtained in Example 3;
Fig. 10 is an SEM image of a ternary positive electrode material precursor obtained in Example 4;
Fig. 11 is an XRD spectrum of the ternary positive electrode material precursor obtained in Example 4;
Fig. 12 is an SEM image of a ternary positive electrode material precursor obtained in

### Example 5; and

Fig. 13 is an XRD spectrum of the ternary positive electrode material precursor obtained in Example 5.

### Detailed Description of Embodiments

As for terms used herein:
the term "prepared from ..." is synonymous with the term "contain". Terms "include", "comprise", "have", "contain" or any other variants thereof as used herein are intended to cover non-exclusive inclusion. For example, a composition, a step, a method, a product, or a device comprising the listed elements are not necessarily limited to these elements, and may comprise other elements not explicitly listed or elements inhering in such a composition, step, method, product, or device.

The conjunctive "composed of ..." excludes any unspecified element, step, or component. When being used in claims, this phrase will make the claims closed, such that materials other than the described materials are not included, except for conventional impurities associated therewith. If the phrase "composed of ..." appears in a clause of the main part of a claim, rather than directly following the subject matter, it only defines elements described in the clause; other elements are not excluded from the claim as a whole.

When equivalent weight, concentration or other values or parameters are expressed in terms of range, preferred range, or range defined by a series of preferred upper limit values and preferred lower limit values, it should be construed as specific disclosure of all ranges formed by any pairing of any range upper limit or preferred value and any range lower limit or preferred value, regardless of whether this range is disclosed separately. For example, if a range "1-5" is disclosed, the described range should be construed in such a manner that ranges "1-4", "1-3", "1-2", "1-2 and 4-5", "1-3 and 5" and the like are included. When a numerical range is described herein, this range is intended to include end values thereof and all integers and fractions within this range, unless otherwise stated.

In these examples, unless otherwise specified, parts and percentages are all defined by mass.

The term "part by mass" refers to a basic unit of measurement indicating mass ratio relationships of multiple components, 1 part may represent any unit mass, for example, it may represent 1 g, and may also represent 2.689 g or the like. If it is defined that there are a parts by mass of component A and b parts by mass of component B, it means that the proportion of the mass of the component A to the mass of the component B is a:b. Alternatively, it means that the mass of the component A is aK, and the mass of the component B is bK (K is any value, indicating a multiplying factor). It should not be misunderstood that differing from mass fraction, the sum of the parts by mass of all components is not limited to 100 parts.

The term "and/or" is used to indicate that one or both of the illustrated situations may possibly occur, for example, situations (A and B) and (A or B) are covered by "A and/or B".

A ternary positive electrode material precursor, comprising a core layer, an intermediate layer, and a shell layer, wherein the intermediate layer covers the core layer, the shell layer covers the intermediate layer, and the porosities of the core layer, the intermediate layer, and the shell layer increase sequentially.

Internal and external pores of conventional materials are very dense, the structure is unstable during the charging and discharging processes, and the stability and the safety performance are relatively poor; while the porosity distribution in a cross section of the ternary positive electrode material precursor is inconsistent, and the porosities of the core layer, the intermediate layer, and the shell layer increase sequentially, which can ameliorate the cycle performance of the ternary positive electrode material and the energy density per unit volume, and improve the structural stability of the material and the safety performance of batteries.

In an optional embodiment, the porosity of the core layer ranges from 5.4% to 17.1 %, the porosity of the intermediate layer ranges from 7.8% to 19.2%, and the porosity of the shell layer ranges from 9% to 20.1%.

In an optional embodiment, the porosity of the core layer ranges from 7.03% to 12.74%, the porosity of the intermediate layer ranges from 8.7% to 13.6%, and the porosity of the shell layer ranges from 14.8% to 16.3%.

After the pretreatment of the material according to the present disclosure through the apparatus HITACHI IM4000, the SEM images of the prepared sample are taken under HITACHI SU8100. The porosity characteristic is evaluated by directly determining the pore area and sectional area of each region using image analysis software (ImageJ), and calculating the porosities of different regions from the equation "porosity = pore area of each region/sectional area of each region × 100%". The porosity herein is characterized by this method.

Optionally, the porosity of the core layer may be 5.4%, 6%, 7%, 8%, 9%, 10%, 11%, 12%, 13%, 14%, 15%, 16%, 17%, 17.1%, or any value within 5.4%-17.1%; the porosity of the intermediate layer may be 7.8%, 8%, 9%, 10%, 11%, 12%, 13%, 14%, 15%, 16%, 17%, 18%, 19%, 19.2%, or any value within 7.8%-19.2%; and the porosity of the shell layer may be 9%, 10%, 11%, 12%, 13%, 14%, 15%, 16%, 17%, 18%, 19%, 20%, 20.1%, or any value within 9%-20.1%.

In an optional embodiment, the pores of the intermediate layer and the shell layer are in a long strip shape.

In an optional embodiment, the width of the pores in the intermediate layer and in the shell layer increases gradually from inside to outside, and the overall shows a radial distribution.

Because of its inconsistent pore sizes inside and outside, the growth thereof shows porous radial pattern, and the prepared ternary positive electrode material can form a lithium-ion diffusion channel from inside to outside, such a channel facilitates the diffusion of electrolyte and the ionic conduction during the charging and discharging processes, which is conducive to the exertion of capacity, and the rate performance of batteries can also be improved to a certain extent.

In an optional embodiment, the radius of the core layer accounts for 25%-30% of the overall radius, the thickness of the intermediate layer accounts for 50%-58.8% of the overall radius, and the thickness of the shell layer accounts for 11.2%-25% of the overall radius.

In an optional embodiment, the D50 of the ternary positive electrode material precursor ranges from 7 to 15 µm, and (D90-D10)/D50 = 0.6-0.8.

Optionally, the D50 of the ternary positive electrode material precursor may be 7 µm, 8 µm, 9 µm, 10 µm, 11 µm , 12 µm, 13 µm, 14 µm, 15 µm, or any value within 7-15 µm; and (D90-D10)/D50 may be 0.6, 0.7. 0.8, or any value within 0.6-0.8.

In an optional embodiment, the half-peak width of 001 crystal facet of the ternary positive electrode material precursor ranges from 0.4 to 0.88°, and the half-peak width of 101 crystal facet ranges from 0.25 to 0.61°.

Optionally, the half-peak width of 001 crystal facet of the ternary positive electrode material precursor may be 0.4°, 0.5°, 0.6°, 0.7°, 0.8°, 0.81°, 0.82°, 0.83°, 0.84°, 0.85°, 0.86°, 0.87°, 0.88°, or any value within 0.4-0.88°; and the half-peak width of 101 crystal facet may be 0.25°, 0.3°, 0.35°, 0.4°, 0.45°, 0.5°, 0.55°, 0.56°, 0.57°, 0.58°, 0.59°, 0.60°, 0.61°, or any value within 0.25-0.61°.

In an optional embodiment, the FWHM (I001-I101)/I101 ratio range of the ternary positive electrode material precursor is 0.1-0.9 (FWHM refers to full width at half maxima; I001 refers to peak intensity of the crystal facet (001) corresponding to diffraction angle 2 θ = 19.2 ± 1 ° ; and I101 refers to peak intensity of the crystal facet (101) corresponding to diffraction angle 2 θ =38.5±1° ).

Optionally, the FWHM (1001-1101)/1101 ratio may be 0.1, 0.2, 0.3, 0.4, 0.5, 0.6, 0.7, 0.8, 0.9, or any value within 0.1-0.9.

By controlling the half-peak width and the FWHM (I001-I101)/I101 ratio, the crystallinity and the structure of the material are ameliorated, so as to enable the micronization of primary particles; the decrease in particle density can be inhibited and the compactness can be improved, which is further conducive to the full use of capacity and to improvement of cycle stability of the material, and can also inhibit the decrease in energy density.

In an optional embodiment, the BET/TD ratio of the ternary positive electrode material precursor ranges from 3.90 to 6.66.

The ratio of BET to TD shows a linear relation, and as the BET/TD ratio increases, the porosity of the material becomes increased, which is conducive to enhancing the safety performance of batteries, while improving the rate performance and the cycle performance of batteries.

Optionally, the BET/TD ratio may be 3.90, 4, 5, 6, 6.66, or any value within 3.90-6.66.

In an optional embodiment, the ternary positive electrode material precursor has a chemical general formula of NiₓCo_{y}Mn_{z}Me_{(1-x-y-z)}(OH)₂, where 0.6 ≤ x ≤ 1, 0 < y ≤ 1, 0 < z ≤ 1, and x+y+z ≤ 1; and Me represents a doped element, and the doped element includes one or more of Al, Ti, V, W, Zr, Mg, Ce, Nb, and La.

In an optional embodiment, the content of the doped element in mass percent ranges from 0.01% to 10%.

The ternary positive electrode material precursor provided in the present disclosure, when the Ni-content is greater than or equal to 0.6, becomes a high-nickel material, and has advantages of good cycle performance, high energy density, good stability and safety performance. By adding Al, Ti, V, W, Zr, Mg, Ce, Nb, La and other metallic elements, the stability of the material structure is enhanced, so as to improve the safety performance and the cycle stability or the like of the material.

Optionally, the content of the doped element in mass percent may be 0.01%, 0.05%, 0.1%, 0.5%, 1%, 2%, 3%, 4%, 5%, 6%, 7%, 8%, 9%, 10%, or any value within 0.01%-10%.

The present disclosure further provides a preparation method for a ternary positive electrode material precursor, comprising:
mixing raw materials including a nickel source, a cobalt source, a manganese source, a precipitating agent, and a complexing agent; and obtaining the ternary positive electrode material precursor through a reaction of solution coprecipitation method.

In an optional embodiment, the nickel source includes nickel sulfate, the cobalt source includes cobalt sulfate, the manganese source includes manganese sulfate, the precipitating agent includes one or more of sodium hydroxide, sodium carbonate, and sodium bicarbonate, and the complexing agent includes one or more of aqueous ammonia, sodium citrate, EDTA, and oxalic acid.

In an optional embodiment, the nickel source, the cobalt source, and the manganese source are pre-mixed to obtain a ternary metal salt solution for use.

In an optional embodiment, the concentration of the ternary metal salt solution ranges from 100 g/L to 130 g/L.

Optionally, the concentration of the ternary metal salt solution may be 100 g/L, 101 g/L, 102 g/L, 103 g/L, 104 g/L, 105 g/L, 106 g/L, 107 g/L, 108 g/L, 109 g/L, 110 g/L, 111 g/L, 112 g/L, 113 g/L, 114 g/L, 115 g/L, 116 g/L, 117 g/L, 118 g/L, 119 g/L, 120 g/L, 121 g/L, 122 g/L, 123 g/L, 124 g/L, 125 g/L, 126 g/L, 127 g/L, 128 g/L, 129 g/L, 130 g/L, or any value within 100 g/L-130 g/L.

In an optional embodiment, the mixing comprises:
firstly, mixing water, the precipitating agent, and the complexing agent to obtain a reaction base solution, then introducing the ternary metal salt solution, the complexing agent, and the precipitating agent into the reaction base solution.

In an optional embodiment, the pH of the substrate liquid is between 11 to 12.

Optionally, the pH of the substrate liquid may be 11.0, 11.1, 11.2, 11.3, 11.4, 11.5, 11.6, 11.7, 11.8, 11.9, 12.0, or any value within 11-12.

In an optional embodiment, a protective gas is introduced into the reaction system.

The protective gas is preferably nitrogen.

In an optional embodiment, during the reaction process, the pH of the system is 10-12, and the range of nickel in the supernatant is controlled at 0-500 ppm.

In an optional embodiment, during the reaction process, the pH of the system gradually decreases from 11.9 to a range of 10.8-10.3.

Optionally, during the reaction process, the pH of the system may be 10, 10.5, 11, 11.5, 12, or any value within 10-12, and the range of nickel in the supernatant may be controlled at 0 ppm, 50 ppm, 100 ppm, 200 ppm, 300 ppm, 400 ppm, 500 ppm, or any value within 0-500 ppm.

In an optional embodiment, the reaction temperature ranges from 40°C to 70°C.

In an optional embodiment, the stirring speed of the reaction ranges from 100 r/min to 600 r/min.

Optionally, the reaction temperature may be 40°C, 50°C, 60°C, 70°C, or any value within 40-70°C; and the stirring speed of the reaction may be 100 r/min, 200 r/min, 300 r/min, 400 r/min, 500 r/min, 600 r/min, or any value within100 r/min-600 r/min.

In an optional embodiment, the raw materials further comprise a doped element solution.

In an optional embodiment, the doped element in the doped element solution includes one or more of Al, Ti, V, W, Zr, Mg, Ce, Nb, and La.

In an optional embodiment, the doped element is W, and the doped element solution contains sodium tungstate and sodium citrate.

In an optional embodiment, the mass ratio between sodium tungstate and sodium citrate is 1-3:1.

Optionally, the mass ratio between sodium tungstate and sodium citrate may be 1:1, 2:1, 3:1, or any value within 1-3:1.

In an optional embodiment, the preparation method for a ternary positive electrode material precursor further comprises postprocessing, which comprises alkali wash, water wash, and drying.

In an optional embodiment, the volume ratio between alkali wash and water wash is as follows: V_{water wash}:V_{alkali wash} = (2-8):1, and the temperatures for alkali wash and water wash are each independently 30-70°C.

In an optional embodiment, the drying temperature ranges from 100°C to 180°C, and the moisture content is less than or equal to 0.4%.

Optionally, volume ratio between alkali wash and water wash may be 2:1, 3:1, 4:1, 5:1, 6:1, 7:1, 8:1, or any value within V_{water wash}:V_{alkali wash} = (2-8):1; the temperatures for alkali wash and water wash may each independently be 30°C, 40°C, 50°C, 60°C, 70°C, or any value within 30-70°C; the drying temperature may be 100°C, 110°C, 120°C, 130°C, 140°C, 150°C, 160°C, 170°C, 180°C, or any value within 100°C-180°C; and the moisture content may be 0.1%, 0.2%, 0.3%, 0.4%, or any value less than or equal to 0.4%.

The present disclosure further provides a positive electrode material, comprising an inner core, an intermediate region, and an outer shell, wherein the intermediate region covers the inner core, the outer shell covers the intermediate region, and the porosities of the inner core, the intermediate region, and the outer shell increase sequentially.

The present disclosure further provides a positive electrode slurry, of which raw materials comprise the positive electrode material as described above.

The present disclosure further provides a lithium-ion battery positive electrode, of which raw materials comprise the lithium-ion battery positive electrode slurry as described above.

The present disclosure further provides a lithium-ion battery, of which raw materials comprise the lithium-ion battery positive electrode as described above.

The present disclosure further provides an electric-involved equipment, comprising the lithium-ion battery as described above.

It shall be clarified that the electric-involved equipment mentioned herein not only refer to circumstances in which an apparatus itself comprises the lithium-ion battery provided in the present disclosure, but also refer to circumstances in which the lithium-ion battery provided in the present disclosure is used as an external power supply or energy carrier; that is, apparatuses powered directly or indirectly by the lithium-ion battery provided in the present disclosure, or apparatuses, which themselves are used as power supply for charging the lithium-ion battery provided in the present disclosure.

In the following contents, the embodiments of the present disclosure will be described in detail with reference to the specific examples; however, a person skilled in the art would understand that the following examples are merely used to illustrate the present disclosure, rather than being deemed as limiting the scope of the present disclosure. Examples, for which no concrete conditions are specified, are performed according to conventional conditions or conditions recommended by the manufactures. Reagents or instruments that are used, for which no manufacturers are specified, are conventional products available commercially.

### Example 1

(1) 79.98 kg of nickel sulfate crystal, 11.30 kg of cobalt sulfate crystal, and 4.06 kg of manganese sulfate crystal were mixed uniformly with pure water to prepare a ternary solution of (2 mol/L), which was prepared into a tungsten solution of 0.91 g/L together with a given amount of sodium tungstate and sodium citrate, which was then used together with a precipitating agent and a complexing agent as main raw materials and auxiliary ingredients; pure water, caustic soda liquid (in a mass concentration of 32%), and aqueous ammonia (in a mass concentration of 20.5%) were added to a reactor to prepare a base solution having a pH range of 11.60-11.70, into which nitrogen was introduced and which was then heated to 60°C at a stirring speed of 539 r/min, and then the ternary solution (4 L/h), the caustic soda liquid (1.6 L/h), the aqueous ammonia (0.22 L/h), and a doped element solution (2 L/h) were introduced at a set flow rate; and during the reaction process, the pH range was (11.65-10.50), the nickel content in the supernatant was controlled to be within 50-100 ppm, and a tungsten-doped nickel-cobalt-manganese ternary precipitate having a median diameter D50 of 10 µm was obtained through reaction.
(2) After solid-liquid separation, the reaction product was subjected to a certain amount of alkali wash and water wash, such that Na content of the reaction product is less than 300 ppm and S content of the reaction product is larger than 2200 ppm and less than 2600 ppm, and the filter cakes were then removed and stored.
(3) After being dispersed, the stored filter cakes were dried and dehydrated in a blowing-type oven, and were removed and stored in a sealed manner, when the moisture content was below 4000 ppm.
(4) The resultant dry material was processed by sieving, deironing to obtain a finished precursor product Nio_{0.9}Co_{0.06}Mn_{0.04}(OH)₂ doped with tungsten (2500 ppm).
(5) The resultant doped precursor material was mixed and sintered with a lithium compound under certain conditions to prepare a doped positive electrode material.

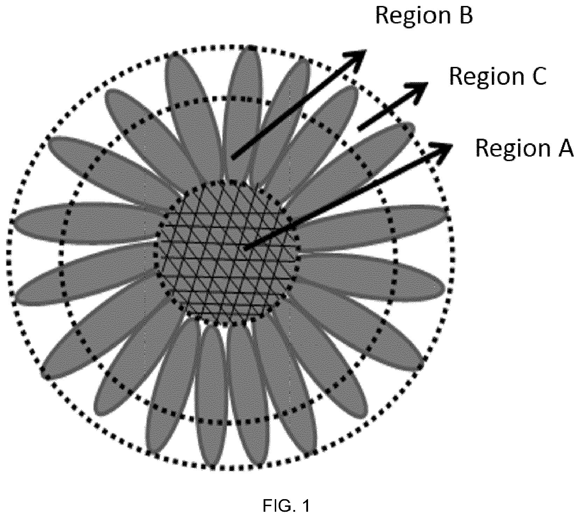

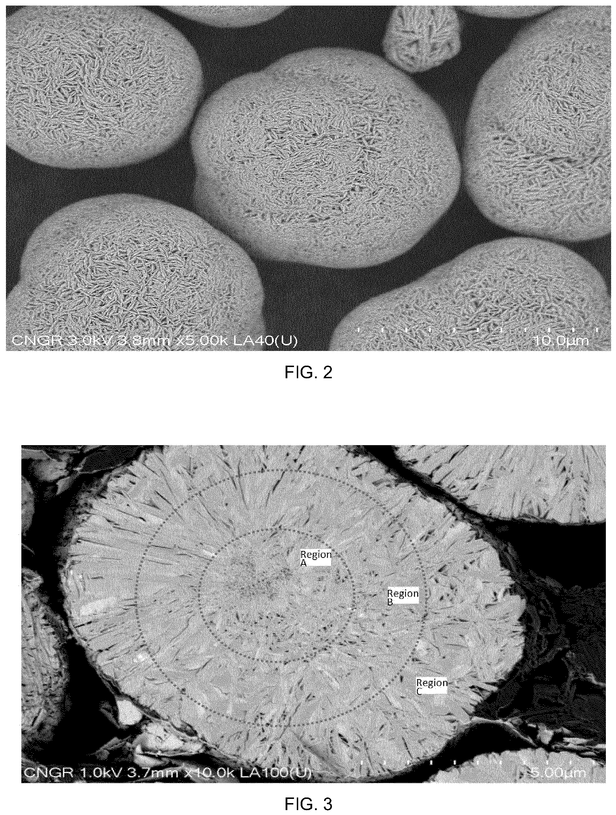

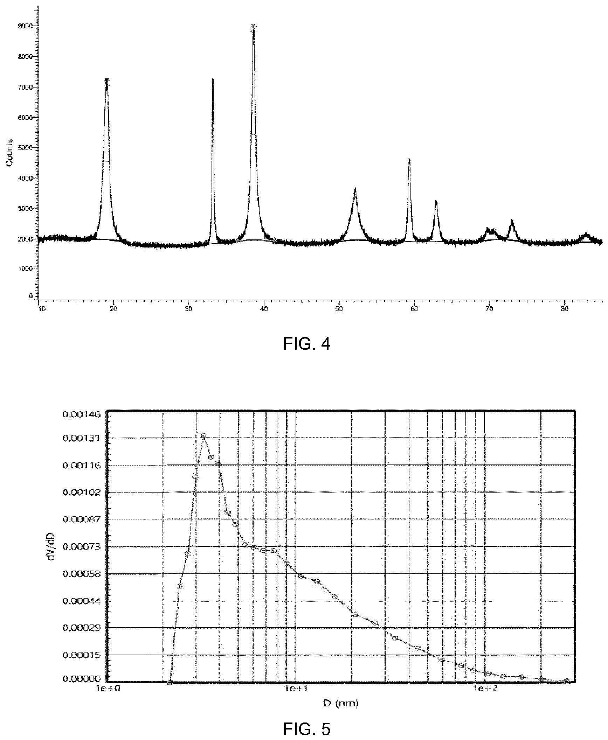

Fig. 1 is a schematic diagram of the model of an obtained ternary positive electrode material precursor, wherein region A represents the core layer, region B represents the intermediate layer, and region C represents the shell layer. Fig. 2 is an SEM image of the ternary positive electrode material precursor obtained in Example 1; Fig. 3 is an SEM image of a profile of the ternary positive electrode material precursor obtained in Example 1; Fig. 4 is an XRD spectrum of the ternary positive electrode material precursor obtained in Example 1, wherein the abscissa is the diffraction peak angle, and the ordinate is the diffraction peak intensity. Fig. 5 is a differential distribution curve of mesoporous pore size of the ternary positive electrode material precursor obtained in Example 1.

### Example 2

(1) 84.82 kg of nickel sulfate crystal, 7.15 kg of cobalt sulfate crystal, and 4.67 kg of manganese sulfate crystal were mixed uniformly with pure water to prepare a ternary solution of (2 mol/L), which was prepared into an aluminum solution of 1.47 g/L together with a given amount of aluminum sulfate and sodium hydroxide, which was then used together with a precipitating agent and a complexing agent as main raw materials and auxiliary ingredients; pure water, caustic soda liquid (in a mass concentration of 32%), and aqueous ammonia were added to a reactor to prepare a base solution having a pH range of 11.60-11.70, into which nitrogen was introduced and which was then heated to 60°C at a stirring speed of 539 r/min, and then the ternary solution (4 L/h), the caustic soda liquid (1.6 L/h), the aqueous ammonia (0.31 L/h), and a doped element solution (2 L/h) were introduced at a set flow rate; and during the reaction process, the nickel content in the supernatant was controlled to be within 50-100 ppm by adjusting the pH to be (11.60-10.55), the stirring frequency was decreased gradually from 539 r/min to 462 r/min, and an aluminum-doped nickel-cobalt-manganese ternary precipitate having a median diameter D50 of 12 µm was obtained through reaction.

Steps (2), (3), and (4) were the same as that in Example 1, and a finished precursor product Ni_{0.88}Co_{0.09}Mn_{0.03}(OH)₂ doped with Al (6000 ppm) was obtained.

Step (5) was the same as that in Example 1.

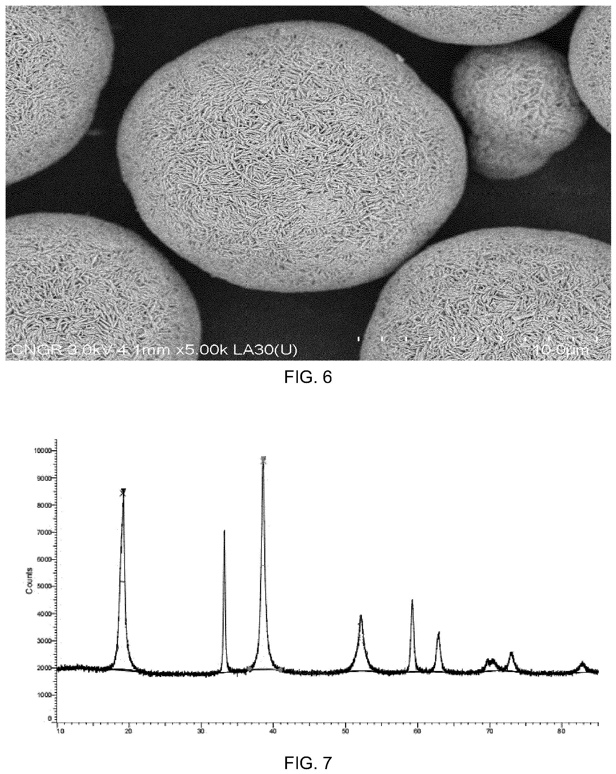

Fig. 6 is an SEM image of the ternary positive electrode material precursor obtained in Example 2; and Fig. 7 is an XRD spectrum of the ternary positive electrode material precursor obtained in Example 2, wherein the abscissa is the diffraction peak angle, and the ordinate is the diffraction peak intensity.

### Example 3

(1) 88.52 kg of nickel sulfate crystal, 5.10 kg of cobalt sulfate crystal, and 3.44 kg of manganese sulfate crystal were mixed uniformly with pure water to prepare a ternary solution of (2 mol/L), which was prepared into a titanium solution of 2.0 g/L together with a given amount of titanyl sulfate, sodium citrate, and sulfuric acid, which was then used together with a precipitating agent and a complexing agent as main raw materials and auxiliary ingredients; pure water, caustic soda liquid (in a mass concentration of 32%), and aqueous ammonia were added to a reactor to prepare a base solution having a pH range of 11.60-11.70, into which nitrogen was introduced and which was then heated to 60°C at a stirring speed of 539 r/min, and then the ternary solution (4 L/h), the caustic soda liquid (1.6 L/h), the aqueous ammonia (0.54 L/h), and a doped element solution (2 L/h) were introduced at a set flow rate; and during the reaction process, the nickel content in the supernatant was controlled to be within 50-100 ppm by adjusting the pH to be (11.65-11.00), the stirring frequency was decreased gradually from 539 r/min to 308 r/min, and a titanium-doped nickel-cobalt-manganese ternary precipitate having a median diameter D50 of 16 µm was obtained through reaction.

Steps (2), (3), and (4) were the same as that in Example 1, and a finished precursor product Ni_{0.92}Co_{0.03}Mn_{0.05}(OH)₂ doped with Ti (4000 ppm) was obtained.

Step (5) was the same as that in Example 1.

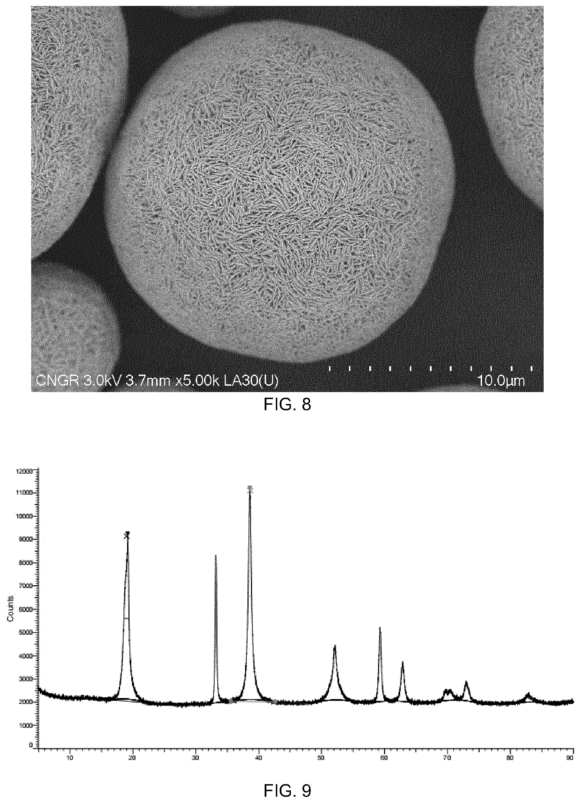

Fig. 8 is an SEM image of the ternary positive electrode material precursor obtained in Example 3; and Fig. 9 is an XRD spectrum of the ternary positive electrode material precursor obtained in Example 3, wherein the abscissa is the diffraction peak angle, and the ordinate is the diffraction peak intensity.

### Example 4

(1) 91.26 kg of nickel sulfate crystal, 4.07 kg of cobalt sulfate crystal, and 2.22 kg of manganese sulfate crystal were mixed uniformly with pure water to prepare a ternary solution of (2 mol/L), which was prepared into a zirconium solution of 3.67 g/L together with a given amount of zirconium sulfate, sodium citrate, and sulfuric acid, which was then used together with a precipitating agent and a complexing agent as main raw materials and auxiliary ingredients; pure water, caustic soda liquid (in a mass concentration of 32%), and aqueous ammonia were added to a reactor to prepare a base solution having a pH range of 11.60-11.70, into which nitrogen was introduced and which was then heated to 60°C at a stirring speed of 539 r/min, and then the ternary solution (4 L/h), the caustic soda liquid (1.6 L/h), the aqueous ammonia (0.6 L/h), and a doped element solution (2 L/h) were introduced at a set flow rate; and during the reaction process, the nickel in the supernatant was controlled to be within 0-200 ppm by adjusting the pH to be (11.65-10.30), the stirring frequency was decreased gradually from 539 r/min to 231 r/min, and a zirconium-doped nickel-cobalt-manganese ternary precipitate having a median diameter D50 of 16 µm was obtained through reaction.

Steps (2), (3), and (4) were the same as that in Example 1, and a finished precursor product Ni_{0.94}Co_{0.04}Mn_{0.02}(OH)₂ doped with Zr (10000 ppm) was obtained.

Step (5) was the same as that in Example 1.

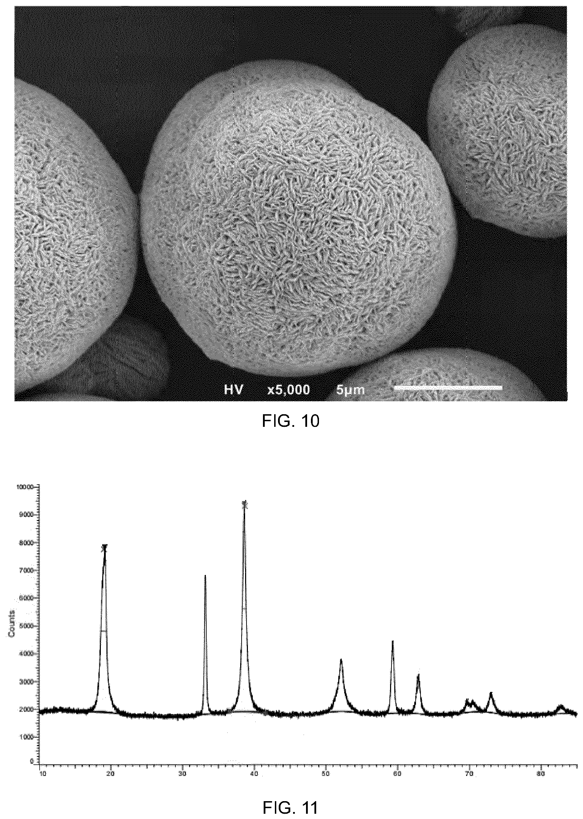

Fig. 10 is an SEM image of the ternary positive electrode material precursor obtained in Example 4; and Fig. 11 is an XRD spectrum of the ternary positive electrode material precursor obtained in Example 4, wherein the abscissa is the diffraction peak angle, and the ordinate is the diffraction peak intensity.

### Example 5

(1) 85.61 kg of nickel sulfate crystal, 6.15 kg of cobalt sulfate crystal, and 2.45 kg of manganese sulfate crystal were mixed and homogenized with pure water to prepare a ternary solution of (2 mol/L), which was used together with a precipitating agent and a complexing agent as main raw materials and auxiliary ingredients; pure water, caustic soda liquid (in a mass concentration of 32%), and aqueous ammonia (in a mass concentration of 20.5%) were added to a reactor to prepare a base solution having a pH range of 11.60-11.70, into which nitrogen was introduced and which was then heated to 60°C at a stirring speed of 539 r/min, and then the ternary solution (4 L/h), the caustic soda liquid (1.6 L/h), the aqueous ammonia (0.22 L/h), and a doped element solution (2 L/h) were introduced at a set flow rate; and during the reaction process, the pH range was (11.65-10.50), the nickel content in the supernatant was controlled to be within 50-100 ppm, and a nickel-cobalt-manganese ternary precipitate having a median diameter D50 of 10 µm was obtained through reaction.

Steps (2), (3), and (4) were the same as that in Example 1, and a finished precursor product Nio.₉₀₅Coo.o₅zMno.o₃₈(OH)₂ was obtained.

Step (5) was the same as that in Example 1.

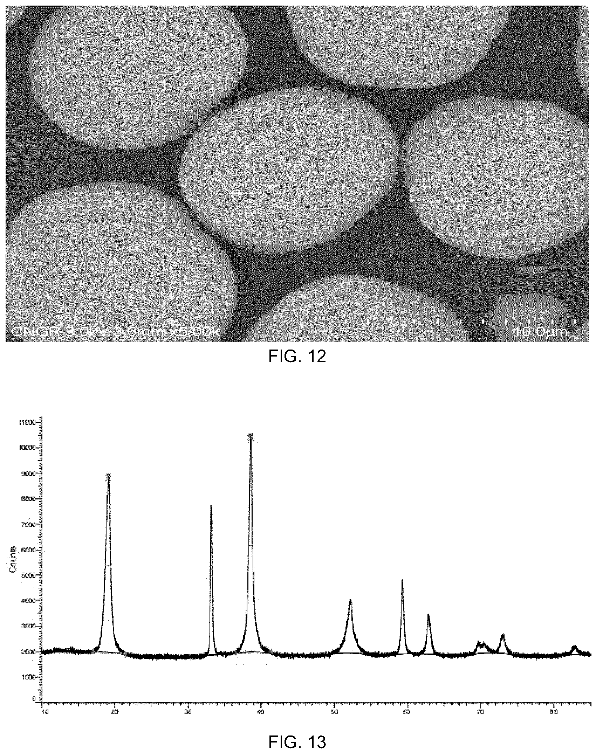

Fig. 12 is an SEM image of the ternary positive electrode material precursor obtained in Example 5; and Fig. 13 is an XRD spectrum of the ternary positive electrode material precursor obtained in Example 5, wherein the abscissa is the diffraction peak angle, and the ordinate is the diffraction peak intensity.

### Comparative Example 1

(1) During the reaction process, the stirring was adjusted to a stirring speed of 616.4 r/min, the feeding flow rate was adjusted as follows: the ternary solution (1 L/h), the caustic soda liquid (0.4 L/h), and the aqueous ammonia (0.05 L/h); while the other conditions were all the same as that in Example 5; and a finished precursor product having a chemical formula of Nio.₉₀₅Coo.o₅zMno.o₃₈(OH)₂ was obtained.

### Comparative Example 2

(1) During the reaction process, the flow rate of the ternary solution was adjusted to increase gradually from 1 L/h to 4 L/h, the flow rate of the caustic soda liquid was adjusted to increase gradually from 0.4 L/h to 1.6 L/h, and the flow rate of the aqueous ammonia was adjusted to increase gradually from 0.12 L/h to 0.16 L/h; while the other conditions were all the same as that in Example 5; and a finished precursor product having a chemical formula of Nio.₉₀₅Coo.o₅zMno.o₃₈(OH)₂ was obtained.

### Comparative Example 3

(1) During the reaction process, the flow rate of the ternary solution was adjusted to 2 L/h, the flow rate of the caustic soda liquid was adjusted to 0.8 L/h, and the flow rate of the aqueous ammonia was adjusted to 0.12 L/h; while the other conditions were all the same as that in Example 5; and a finished precursor product having a chemical formula of Nio.₉₀₅Coo.o₅zMno.o₃₈(OH)₂ was obtained.

### Comparative Example 4

(1) During the reaction process, the flow rate of the ternary solution was adjusted to increase gradually from 2 L/h to 7 L/h, the flow rate of the caustic soda liquid was adjusted to increase from 0.8 L/h to 2.8 L/h, and the aqueous ammonia was adjusted to increase gradually from 0.12 L/h to 0.28 L/h; while the other conditions were all the same as that in Example 5; and a finished precursor product having a chemical formula of Nio.₉₀₅Coo.o₅zMno.o₃₈(OH)₂ was obtained.

### Control Example 1

(1) During the reaction process, the flow rate of the aqueous ammonia was adjusted to decrease gradually from 0.54 L/h to 0.40 L/h, while the other conditions were all the same as that in Example 5; and a finished precursor product having a chemical formula of Nio.₉₀₅Coo.o₅zMno.o₃₈(OH)₂ was obtained.

### Control Example 2

(1) During the reaction process, the stirring speed was adjusted to be decelerated from a stirring speed of 693.7 r/min to a stirring speed of 539.7 r/min, while the other conditions were all the same as that in Example 5; and a finished precursor product having a chemical formula of Nio.₉₀₅Coo.o₅zMno.o₃₈(OH)₂ was obtained.

Parameters and performance test results of the materials obtained in the examples and in the comparative examples and control examples are shown in Table 1 below:

**Table 1 Precursor data**

| Items | BET/TD | half-peak width of (001) facet | half-peak width of (101) facet | FWHM (I001-I101/ I101) | A region porosity % | B region porosity % | C region porosity % | Doping amount ppm |
|---|---|---|---|---|---|---|---|---|
| Example 1 | 4.14 | 0.878 | 0.607 | 0.446 | 7.3 | 8.8 | 15.6 | 2500 |
| Example 2 | 5.93 | 0.725 | 0.519 | 0.397 | 14.1 | 15.5 | 17.8 | 6000 |
| Example 3 | 5.14 | 0.819 | 0.550 | 0.489 | 9.2 | 10.3 | 12.5 | 4000 |
| Example 4 | 6.04 | 0.788 | 0.562 | 0.402 | 16.9 | 17.6 | 19.8 | 10000 |
| Example 5 | 4.87 | 0.764 | 0.542 | 0.410 | 9.20 | 10.82 | 15.9 | / |
| Comparative Example 1 | 4.92 | 0.725 | 0.593 | 0.223 | 5.2 | 5.2 | 5.2 | / |
| Comparative Example 2 | 5.33 | 0.618 | 0.499 | 0.238 | 4.3 | 6.9 | 8.8 | / |
| Comparative Example 3 | 4.05 | 0.522 | 0.512 | 0.020 | 10.2 | 7.9 | 6.3 | / |
| Comparative Example 4 | 6.04 | 0.637 | 0.544 | 0.171 | 9.2 | 5.2 | 10.3 | / |
| Control Example 1 | 3.06 | 0.562 | 0.551 | 0.020 | 5.42 | 3.0 | 1.02 | / |
| Control Example 2 | 4.0 | 0.598 | 0.545 | 0.097 | 3.3 | 2.52 | 1.25 | / |

**Table 2 Data of positive electrode material**

| Items | Capacity retention ratio after 100 cycles at 1C (%) | Rate (1C/0.1C) | Mass energy density of batteries Wh/kg |
|---|---|---|---|
| Example 1 | 98.9 | 97.2 | 1130 |
| Example 2 | 97.8 | 96.3 | 951 |
| Example 3 | 98.4 | 96.9 | 1005 |
| Example 4 | 97.5 | 96.5 | 989 |
| Example 5 | 98.8 | 97.3 | 1100 |
| Comparative Example 1 | 92.3 | 91.8 | 923 |
| Comparative Example 2 | 91.2 | 90.8 | 913 |
| Comparative Example 3 | 90.6 | 90.2 | 904 |
| Comparative Example 4 | 93.2 | 92.2 | 932 |
| Control Example 1 | 91.2 | 90.3 | 894 |
| Control Example 2 | 90.3 | 90.0 | 885 |

It can be determined from the data in Tables 1 and 2 that a doped high-nickel ternary positive electrode material having special pore distribution was obtained in Examples 1-5; as for the precursor materials prepared in these examples, the porosity in region A ranged from 7.3% to 16.9%, the porosity in region B ranged from 8.8% to 17.6%, and the porosity in region C ranged from 12.5% to 19.8%, the XRD half-peak width (I001-I101)/I101 ranged from 0.397 to 0.489, and BET/TD ranged from 4.14 to 6.04; in addition, it is further confirmed that the capacity retention of batteries produced from this positive electrode material is above 97%, the (1C/0.1C) rate is maintained to be above 96%, and thus excellent cycle property and rate performance are possessed.

On the other hand, it is confirmed that a doped high-nickel ternary positive electrode material having special pore distribution was also prepared in Comparative Examples 1-4. In Comparative Example 1, BET/TD ranged from 3.90 to 6.84, XRD half-peak width (I001-I101)/I101 ranged from 0.1-0.9, the porosity in region A was lower than 5.4%, the porosity in region B was lower than 7.8%, and the porosity in region C was lower than 9%. In Comparative Example 2, BET/TD ranged from 3.90 to 6.84, XRD half-peak width (I001-I101)/I101 ranged from 0.1-0.9, the porosity in region A was lower than 5.4%, the porosity in region B was lower than 7.8%, and the porosity in region C was lower than 9%. In Comparative Example 3, BET/TD ranged from 3.90 to 6.84, XRD half-peak width (I001-I101)/I101 ranged from 0.1-0.9, the porosity in region A ranged from 5.4% to 17.1%, the porosity in region B ranged from 7.8% to 19.2%, and the porosity in region C was lower than 9%. In Comparative Example 4, BET/TD ranged from 3.90 to 6.84, XRD half-peak width (1001-1101)/1101 ranged from 0.1-0.9, the porosity in region A ranged from 5.4% to 17.1%, the porosity in region B is lower than 7.8%, and the porosity in region C ranged from 9% to 20.1%. In addition, it is further confirmed that the capacity retention of batteries produced based on this positive electrode material is below 94%, the (1C/0.1C) rate is maintained to be below 93%, thus, compared with Examples 1-5, the cycle performance and the rate performance are both relatively poor.

At last, it shall be clarified that the above respective embodiments are merely used to illustrate the technical solutions of the present disclosure, rather than limiting the same; although the present disclosure is illustrated in detail referring to the preceding respective embodiments, it should be understood for a person ordinarily skilled in the art that modifications may still be made to the technical solutions recorded in the preceding respective embodiments, or partial or all technical features therein may be substituted with equivalents; and these modifications or substitutions do not make the essence of the respective technical solutions depart from the scope of the technical solutions of the respective embodiments of the present disclosure.

In addition, it could be understandable for a person skilled in the art, although some embodiments described here contain certain features included in other embodiments but not other features, combinations of features of different embodiments mean that they are within the scope of the present disclosure and different embodiments are formed. For example, in the above claims, any one of the claimed embodiments can be used in any combination. Information disclosed in the part Background Art is only intended to deepen the understanding of the overall background of the present disclosure, and should not be regarded as an acknowledgement or an implication in any form that the information constitutes the prior art that would be already known for a person skilled in the art.

## Claims

1. A ternary positive electrode material precursor, **characterized by** comprising a core layer, an intermediate layer, and a shell layer, wherein the intermediate layer covers the core layer, the shell layer covers the intermediate layer, and porosities of the core layer, the intermediate layer, and the shell layer increase sequentially.

2. The ternary positive electrode material precursor according to claim 1, wherein a porosity of the core layer ranges from 5.4% to 17.1%, a porosity of the intermediate layer ranges from 7.8% to 19.2%, and a porosity of the shell layer ranges from 9% to 20.1 %;
preferably, the porosity of the core layer ranges from 7.03% to 12.74%, the porosity of the intermediate layer ranges from 8.7% to 13.6%, and the porosity of the shell layer ranges from 14.8% to 16.3%.

3. The ternary positive electrode material precursor according to claim 1, wherein a radius of the core layer accounts for 25%-30% of an overall radius, a thickness of the intermediate layer accounts for 50%-58.8% of the overall radius, and a thickness of the shell layer accounts for 11.2%-25% of the overall radius.

4. The ternary positive electrode material precursor according to claim 1, wherein a D50 of the ternary positive electrode material precursor ranges from 7 to 15 µm, and (D90-D10)/D50 = 0.6-0.8;
preferably, a half-peak width of a (001) crystal facet of the ternary positive electrode material precursor ranges from 0.4 to 0.88°, and a half-peak width of a (101) crystal facet ranges from 0.25 to 0.61°;
preferably, an FWHM (1001-1101)/1101 ratio range is 0.1-0.9;
preferably, a BET/TD ratio of the ternary positive electrode material precursor ranges from 3.90 to 6.66.

5. The ternary positive electrode material precursor according to any one of claims 1 to 4, wherein the ternary positive electrode material precursor has a chemical general formula of NiₓCo_{y}Mn_{z}Me_{(1-x-y-z)}(OH)₂, where 0.6 ≤ x ≤ 1, 0 < y ≤ 1, 0 < z ≤ 1, and x+y+z ≤ 1; and Me represents a doped element, and the doped element comprises one or more of Al, Ti, V, W, Zr, Mg, Ce, Nb, and La;
preferably, a content of the doped element in mass percent ranges from 0.01% to 10%.

6. A preparation method for a ternary positive electrode material precursor, **characterized by** comprising:
mixing raw materials comprising a nickel source, a cobalt source, a manganese source, a precipitating agent, and a complexing agent; and obtaining the ternary positive electrode material precursor through a reaction of solution coprecipitation method.

7. The preparation method for a ternary positive electrode material precursor according to claim 6, wherein the nickel source comprises nickel sulfate, the cobalt source comprises cobalt sulfate, the manganese source comprises manganese sulfate, the precipitating agent comprises one or more of sodium hydroxide, sodium carbonate, and sodium bicarbonate, and the complexing agent comprises one or more of aqueous ammonia, sodium citrate, EDTA, and oxalic acid;
preferably, the nickel source, the cobalt source, and the manganese source are pre-mixed to obtain a ternary metal salt solution for use;
preferably, a concentration of the ternary metal salt solution ranges from 100 g/L to 130 g/L;
preferably, the mixing comprises:
firstly, mixing water, the precipitating agent, and the complexing agent to obtain a reaction base solution, then introducing the ternary metal salt solution, the complexing agent, and the precipitating agent into the reaction base solution;
preferably, a pH of the substrate liquid is 11-12;
preferably, a protective gas is introduced into a reaction system.

8. The preparation method for a ternary positive electrode material precursor according to claim 6, wherein during a reaction process, a pH of a system is 10-12, and a range of nickel content in a supernatant is controlled at 0-500 ppm;
preferably, during the reaction process, the pH of the system gradually decreases from 11.9 to a range of 10.8-10.3;
preferably, a reaction temperature ranges from 40°C to 70°C;
preferably, a stirring speed of the reaction ranges from 100 r/min to 600 r/min.

9. The preparation method for a ternary positive electrode material precursor according to claim 6, wherein the raw materials further comprise a doped element solution;
preferably, a doped element in the doped element solution comprises one or more of Al, Ti, V, W, Zr, Mg, Ce, Nb, and La;
preferably, the doped element is W, and the doped element solution contains sodium tungstate and sodium citrate;
preferably, a mass ratio of sodium tungstate to sodium citrate is 1-3:1.

10. The preparation method for a ternary positive electrode material precursor according to any one of claims 6 to 9, wherein the preparation method for a ternary positive electrode material precursor further comprises postprocessing, which comprises alkali wash, water wash, and drying;
preferably, a volume ratio of the alkali wash to the water wash is as follows: V_{water wash}:V_{alkali wash} = (2-8):1, and temperatures for the alkali wash and the water wash are each independently 30-70°C;
preferably, a drying temperature ranges from 100°C to 180°C, and a moisture content is less than or equal to 0.4%.

11. A positive electrode material, **characterized by** comprising an inner core, an intermediate region, and an outer shell, wherein the intermediate region covers the inner core, the outer shell covers the intermediate region, and porosities of the inner core, the intermediate region, and the outer shell increase sequentially.

12. A positive electrode slurry, **characterized in that** raw materials thereof comprise the positive electrode material according to claim 11.

13. A lithium-ion battery positive electrode, **characterized in that** raw materials thereof comprise the positive electrode slurry according to claim 12.

14. A lithium-ion battery, **characterized in that** raw materials thereof comprise the lithium-ion battery positive electrode according to claim 13.

15. An electric-involved equipment, **characterized by** comprising the lithium-ion battery according to claim 14.
